# EUROPÄISCHE PATENTANMELDUNG

(11) **EP 0 696 699 A1**
(43) Veröffentlichungstag der Anmeldung: **14.02.1996**
(21) Anmeldenummer: 95111986.6
(22) Anmeldetag: 31.07.1995
(51) Int. Cl.: F16K 51/00, E03B 7/08

(54) **Entleerventil**

(30) Priorität: 11.08.1994 DE 4428453
(71) Anmelder: Georg Fischer Rohrleitungssysteme AG, CH-8201 Schaffhausen (CH)
(72) Erfinder: Porfido, Erasmo, CH-8200 Schaffhausen (CH); Bamberger, Michael, D-78262 Gailingen (DE)
(74) Vertreter: Szilagyi, Marianne

(57) **Zusammenfassung**

Ein Entleerventil (1) zum Entleeren von Kunststoff-Leitungen, insbesondere Wasserleitungen, weist ein Gehäuse mit unterschiedlichen, hohlzylindrischen Bereichen (3,4,6) auf und besteht aus einem thermoplastischen Kunststoff. An einem Ende des Entleerventiles ist das Gehäuse (2) mit einem Leitungsbauteil (22) einstückig oder fest verbindbar. Am anderen Ende des Entleerventiles (1) ist ein Gewindestück (7) an dem Gehäuse (2) angeordnet, wobei das Gewinde (8) koaxil zur Längsachse (9) des Entleerventiles liegt. In diesem Gewinde (8) ist eine Spindel (11) mit einem kolbenartigen Ventilkörper (11a) eingesetzt. Der Ventilkörper (11a) liegt in der Schliessstellung mit seiner einen Kolbenfläche (12) an der Dichtungsfläche des Gehäuses (13) an.

## Beschreibung

Die Erfindung betrifft ein Entleerventil mit den Merkmalen des Oberbegriffs der Ansprüche 1 und 4.

Entleerventile aus Metall sind bekannt. Sie weisen ein Anschlussgewinde auf, über das sie mit dem Leitungsbauteil aus Kunststoff verbindbar sind. Dazu muss zunächst ein Einlegeteil aus Metall auf ein Rohransatzstück des Leitungsbauteils aufgeschoben und anschliessend mit diesem fest verbunden werden, beispielsweise durch eine Klemmverbindung. Das Einlegeteil weist ein Anschlussgewinde auf, in welches das Ventil eingeschraubt wird. An den Dichtungsstellen müssen Dichtungselemente eingesetzt werden, die z.B. aus Gummi bestehen. Diese Dichtungselemente weisen eine beschränkte Lebensdauer auf.

Aufgabe der vorliegenden Erfindung ist die Schaffung eines Entleerventils für Leitungen, insbesondere Wasserleitungen, aus Kunststoff, das weniger Verbindungsstellen und somit weniger Dichtungen erfordert und zudem eine hohe Lebensdauer aufweist.

Diese Aufgabe wird durch die kennzeichnenden Merkmale von Anspruch 1 gelöst. Weitere vorteilhafte Ausgestaltungen der Erfindung sind in den hiervon abhängigen Ansprüchen beschrieben. Als Leitungsbauteil wird dabei nicht nur ein Teil der Rohrleitung selbst, sondern auch jedes Bauteil in einer solchen Leitung, z.B. einer Armatur, wie Absperrschieber oder dgl. verstanden.

Der Vorteil der Erfindung liegt darin, dass das Gehäuse des Entleerventiles direkt am Kunststoff-Leitungsbauteil angeordnet werden kann. Es wird in dieses aufgesetzt oder in dieses eingesetzt und anschliessend mit diesem verschweisst. Eine weitere Möglichkeit besteht darin, dass das Gehäuse des Entleerventils im Kunststoff-Leitungsbauteil integriert ist. Alle Ausführungen führen dazu, dass die Anzahl der Dichtungsstellen, die zu Undichtigkeiten führen könnten, reduziert werden.

Durch die geringe Anzahl der Einbauteile die nötig sind, um das Entleerventil an dem Leitungsbauteil der Kunststoffleitung anzubringen, wird der Einbau vereinfacht. Ist das Gehäuse in das Kunststoff-Leitungsbauteil bereits integriert, braucht nur noch der Ventilkörper eingebaut zu werden.

Durch die konstruktive Gestaltung der Dichtungsstelle zwischen Ventilkörper und Gehäuse gemäss dem Anspruch 4 kann auf herkömmliche Dichtungselemente, z.B. solche aus Gummi, verzichtet werden. Hierzu tragen insbesondere die Ausführungsformen nach den Ansprüchen 10 und 11 bei.

Die Erfindung ist nachstehend anhand einiger in der Zeichnungen dargestellter Ausführungsbeispiele beschrieben. In der Zeichnung zeigen:
- Figur 1: einen Längsschnitt eines Entleerventiles
- Figur 2: einen Längsschnitt einer Variante des Entleerventiles
- Figur 3: einen Längsschnitt einer weiteren Variante des Entleerventiles und
- Figur 4: einen Längsschnitt eines Absperrschiebers mit zwei Entleerventilen.

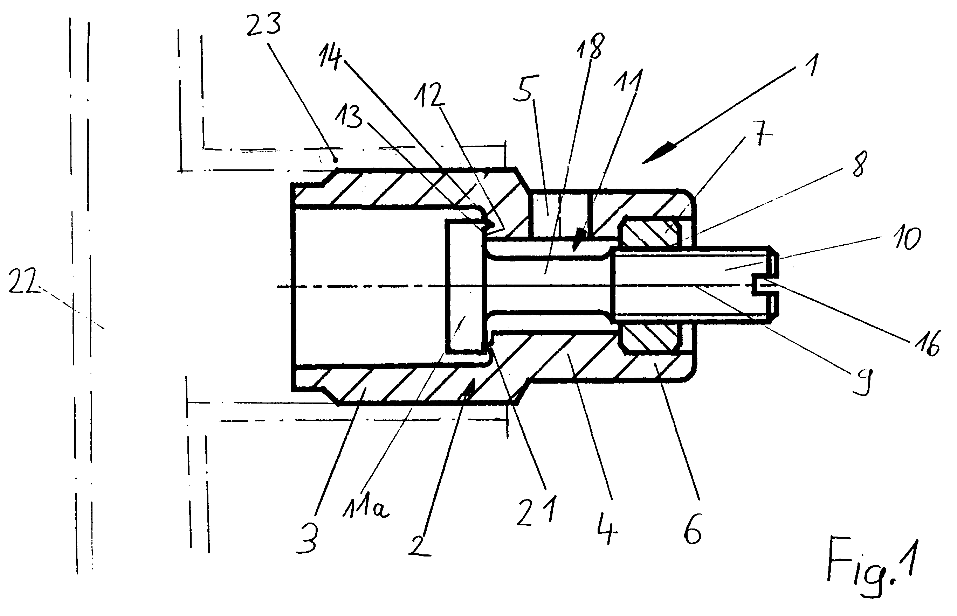

In Figur 1 ist ein Entleerventil 1 zum Entleeren von Wasserleitungen einer Brauchwasserinstallation dargestellt. Das Gehäuse 2 des Entleerventiles 1 besteht aus einem thermoplastischen Kunststoff. An einem Ende des Entleerventils ist das Gehäuse 2 als Schweissstutzen 3 ausgebildet, über den das Entleerventil 1 mit einem Leitungsbauteil einer Kunststoffleitung verschweisst wird. Der Schweissstutzen 3 ist an seinem Aussendurchmesser so ausgelegt, dass er in einen Stutzen 23 des Leitungsbauteils 22 eingesetzt werden kann. Das Leitungsbauteil 22 kann z.B. als Formteil, als Absperrarmatur, als Verteiler oder als Leitungsrohr ausgebildet sein.

Das Entleerventil 1 wird mit seinem Schweissstutzen 3 durch Heizelementschweissung mit dem Leitungsbauteil 22 verbunden. Es kann der Schweissstutzen 3 oder Stutzen 23 mit einer nicht dargestellten elektrischen Wicklung ausgestattet sein, um beide Teile durch eine Heizwendelschweissung zu verbinden. Das Entleerventil 1 kann auch so ausgebildet sein, dass es nicht in, sondern auf den Stutzen 23 des Leitungsbauteils 22 aufgesetzt werden kann. Auch dabei kann eine Heizelement- oder Heizwendelschweissung erfolgen.

An den Schweissstutzen 3 schliesst sich ein hohlzylindrischer Abschnitt 4 an, dessen Innendurchmesser kleiner als der des Schweissstutzens 3 ist. Der Aussendurchmesser kann in diesem Bereich ebenfalls kleiner sein. Ungefähr in der Mitte des Abschnittes 4 ist eine Entleeröffnung 5 angeordnet. An dieser kann sich ein nicht gezeigter Rohransatz anschliessen, der die Einbauposition nach unten hin anzeigt. Im Bereich 6 des Abschnittes 4 ist innen ein Gewindestück 7 fest mit dem Gehäuse 2 verbunden, dessen Innengewinde 8 koaxil zur Längsachse 9 des Entleerventiles liegt. Das Gewindestück 7 ist vorzugsweise aus Metall und kann eine handelsübliche Mutter sein. In deren Gewinde 8 verläuft eine Ventilspindel 11, vorzugsweise aus Metall, mit ihrem Gewindeteil 10. Die Spindel 11 besitzt einen Schaft 18 an dessen Ende der Ventilkörper 11a angeordnet ist. Der Ventilkörper 11a ist kolbenartig ausgebildet und wirkt in Schliessstellung mit seiner zur Spindel weisenden Kolbenfläche 12 der Dichtfläche des Gehäuses 13 zusammen.

An der Kolbenfläche 12 des Ventilkörpers 11a ist nahe dem Umfang ein ringförmiger Vorsprung 14 angeordnet, welcher einen zackenförmigen Querschnitt aufweist. Wenn der Vorsprung 14 der Dichtfläche 13 des Kunststoffgehäuses 3 anliegt bzw. in diese eingreift, ist der Wasserdurchfluss gesperrt. Eine andere Ausführung der Ventildichtung ist in der unteren Hälfte der Figur 1 gezeigt. Dort ist ein ringförmiger Vorsprung 21, welcher einen dreieckförmigen Querschnitt aufweist, an der Gehäusedichtfläche 13 angeordnet. Wenn die ebene Kolbenfläche 12 dem Vorsprung 21, welcher als Liniendichtung wirkt, anliegt, ist das Entleerventil geschlossen. Durch die geometrische Ausgestaltung und die Werkstoffpaarung ist ein zusätzliches Dichtelement entbehrlich. Beispielsweise kann der Ventilkörper 11a aus einem härterem Material, als die Gehäusedichtfläche 13 bestehen. Eine geeignete Werkstoffpaarung ist z. B. Metall für den Ventilkörper 11a und Kunststoff für die Gehäusefläche 13.

In der in Figur 1 gezeigten Stellung ist das Entleerventil 1 geschlossen. Durch Drehen der Spindel 11 mit Hilfe eines Schraubendrehers, der in den Schlitz 16 an dem Gewindeteil 10 eingesetzt wird, kann die Spindel 11 in Öffnungsposition gebracht werden. Anstelle des Schlitzes 16 kann die Spindel 11 eine andere Kopfgeometrie aufweisen, um ein Werkzeug zum Betätigen der Spindel 11 ansetzen zu können, z.B. können ein Vierkant oder zwei parallele Flächen am Umfang für einen Gabelschlüssel angeordnet sein. Es besteht auch die Möglichkeit, direkt auf der Spindel 11 ein Teil anzuordnen, um die Spindel ohne Werkzeug betätigen zu können, z.B. mit einem Hebel oder einem Handrad. Das Wasser fliesst in Öffnungsposition am Ventilkörper 11a vorbei, anschliessend in die Innenbohrung des mittleren Abschnittes 4 des Ventiles und dann durch die Auslassöffnung 5 ab.

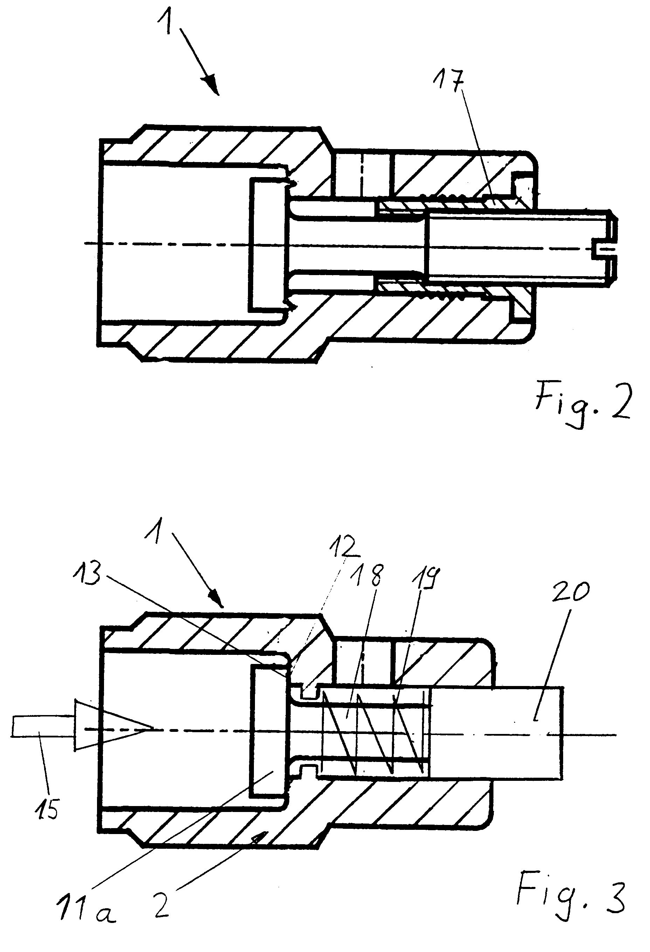

Figur 2 zeigt eine andere Variante des Entleerventiles 1 mit einem anderen Gewindeteil. In dieser Ausführung ist anstelle des Gewindestückes 7 eine Gewindehülse 17 eingesetzt, welche einen geringeren Aussendurchmesser als das Gewindestück 7 aufweist. Dadurch kann diese Variante kompakter gestaltet werden.

Figur 3 zeigt eine weitere Variante des Entleerventiles 1 mit einer Druckfederanordnung gezeigt. Der Ventilkörper 11a und der Kolbenschaft 18 sind im Gehäuse 2 axial durch einen Kolbenschieber 20 verschiebbar gelagert. Zwischen Kolbenschaft 18 und dem Gehäuse 3 liegt eine Druckfeder 19. Die Druckfeder 19 ist so angeordnet, dass sie den kolbenartigen Ventilkörper 11a gegen die Dichtfläche am Gehäuse 13 andrückt. In dieser Ausführung liegt die Kolbenfläche 12 einer flachen Gehäusedichtfläche 13 an. Zusätzlich zur Feder unterstützt der Druck des Mediums 15 das dichte Verschliessen des Ventilkörpers 11a gegen die Gehäusedichtfläche 13. Zum Entleeren der Wasserleitung genügt ein Druck auf das äussere Ende des Kolbenschiebers 20. Ein Werkzeug wird hierzu nicht benötigt.

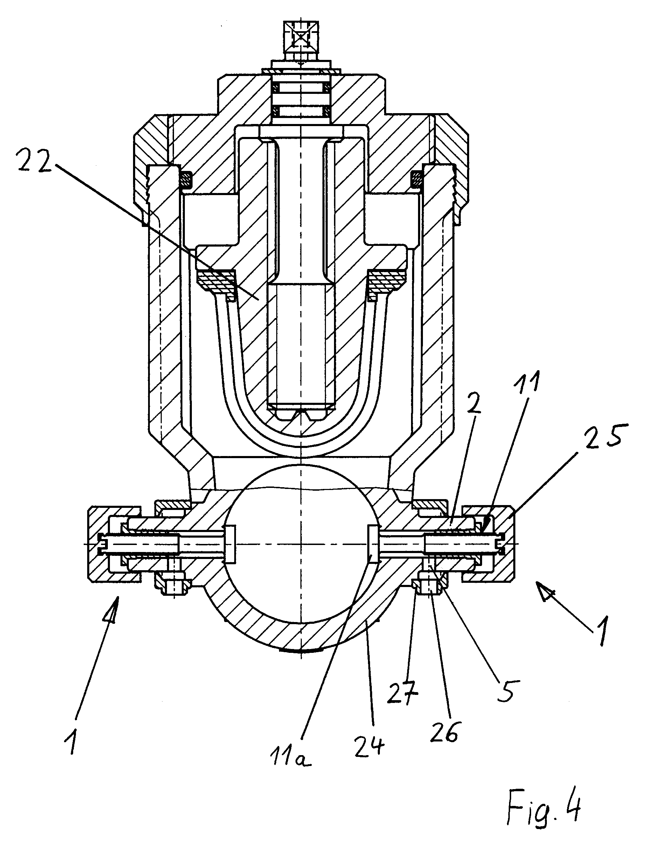

Figur 4 zeigt eine weitere Anwendungsmöglichkeit des Entleerventiles. Das Leitungsbauteil 22 ist ein Teil eines Absperrschiebers, z.B. dessen Zulauf- oder Ablaufstutzen. Das Gehäuse 2 des Entleerventiles 1 ist im Gehäuse 24 des Absperrschiebers 22 integriert. Je nach Einbaulage des Absperrschiebers weist die Entleeröffnung 5 in unterschiedliche Richtungen. Damit beim Öffnen des Ventilkörpers 11a das Wasser in die gewünschte Richtung abläuft, ist über die Entleeröffnung 5 ein Ring 27 mit einer weiteren Entleeröffnung 26 aufgepresst, die unabhängig von der Lage der Entleeröffnung 5 angeordnet werden kann. Zum Öffnen des Ventilkörpers 11a ist am Kopf der Spindel 11 ein Handrad 25 angeordnet. Die weitere Ausgestaltung des Ventiles ist bereits oben beschrieben. An dem Absperrschieber 22 sind zwei Entleerventile 1 gegenüberliegend angeordnet, um in jeder Einbaulage eines der beiden Entleerventile betätigen zu können.

## Patentansprüche

1. Entleerventil zum Entleeren von Leitungen aus Kunststoff, insbesondere Wasserleitungen, bestehend aus einem mit einem Leitungsbauteil verbundenen Gehäuse und einem darin angeordneten Ventilkörper, dadurch gekennzeichnet, dass das Gehäuse (4) des Entleerventils (1) aus Kunststoff besteht und integriertes Teil des Leitungsbauteils (22) ist oder mit diesem werkstoffschlüssig verbindbar ist.

2. Entleerventil nach Anspruch 1, dadurch gekennzeichnet, dass das Gehäuse (2) des Entleerventiles (1) an einem Ende einen Schweissstutzen (3) aus Kunststoff zum Verschweissen mit dem Leitungsbauteil (22) aufweist und direkt auf dieses aufsetzbar oder in dieses einsetzbar ist.

3. Entleerventil nach Anspruch 2, dadurch gekennzeichnet, dass das Gehäuse (2) des Entleerventils (1) mit dem Rohrleitungsteil (22) durch Heizwendel- oder durch Heizelementschweissung verbindbar ist.

4. Entleerventil, insbesondere nach einem der Ansprüche 1 bis 3, mit einem Gehäuse und einer darin geführten Ventilspindel mit dem Ventilkörper, der in der Schliessstellung gegen eine Dichtfläche am Gehäuse wirkt, dadurch gekennzeichnet, dass der Ventilkörper (11a) kolbenartig ausgebildet ist und mit seiner der Spindel zugekehrten Kolbenfläche (12) gegen die Dichtfläche (13) des Gehäuses (4) wirkt.

5. Entleerventil nach Anspruch 4, dadurch gekennzeichnet, dass die dichtende Kolbenfläche (12) des Ventilkörpers einen ringförmigen Vorsprung (4), vorzugsweise mit einem dreieckförmigen Querschnitt aufweist, der in Schliessstellung zur Anlage an oder zum Eingriff in die Dichtfläche (13) des Gehäuses (4) bestimmt ist.

6. Entleerventil nach Anspruch 4, dadurch gekennzeichnet, dass die Gehäusedichtfläche (13) einen ringförmigen Vorsprung (21), vorzugsweise mit einem dreieckförmigen Querschnitt aufweist, an welcher die Kolbenfläche (12) des Ventilkörpers (11a) in der Schliessstellung zur Anlage kommt.

7. Entleerventil nach Anspruch 4, dadurch gekennzeichnet, dass in der Schliessstellung die Kolbenfläche (12) des Ventilkörpers (11a) an einer ebenen Gehäusedichtfläche (13) in dichte Anlage bringbar ist.

8. Entleerventil nach einem der Ansprüche 1 bis 7, dadurch gekennzeichnet, dass der Ventilkörper (11a) mittels einer Gewindeanordnung (7, 8, 10) betätigbar ist.

9. Entleerventil nach einem der Ansprüche 1 bis 8, dadurch gekennzeichnet, dass der Ventilkörper (11a) durch eine Druckfeder (19) in der Schliessstellung gehalten ist.

10. Entleerventil nach einem der Ansprüche 1 bis 9, dadurch gekennzeichnet, dass der Ventilkörper (11a) in Durchflussrichtung des Ventils schliesst.

11. Entleerventil nach einem der Ansprüche 1 bis 10, dadurch gekennzeichnet, dass der Ventilkörper (11a) durch den Druck des Mediums (15) an die Dichtfläche (13) beaufschlagt ist.

12. Entleerventil nach einem der Ansprüche 1 bis 11, dadurch gekennzeichnet, dass das Gehäuse (2) aus einem thermoplastischen Kunststoff hergestellt ist.

13. Entleerventil nach einem der Ansprüche 1 bis 12, dadurch gekennzeichnet, dass der Ventilkörper und zumindest die Dichtfläche (13) des Gehäuses (2) aus Werkstoffen mit unterschiedlichem Elastizitätsmodul bestehen.

14. Entleerventil nach einem der Ansprüche 1 bis 13, dadurch gekennzeichnet, dass der Ventilkörper (11a) und das Gehäuse (2) aus Werkstoffen mit gleichem Elastizitätsmodul bestehen.
